# EUROPEAN PATENT APPLICATION

(11) **EP 3 582 068 A1**
(43) Date of publication of application: **18.12.2019**
(21) Application number: 17896148.8
(22) Date of filing: 01.12.2017
(51) Int. Cl.: G06F 3/01, G06F 3/0346

(54) **INFORMATION PROCESSING DEVICE, INFORMATION PROCESSING METHOD, AND PROGRAM**

(30) Priority: 13.02.2017 JP 2017023721
(71) Applicant: Sony Corporation, Tokyo 108-0075 (JP)
(72) Inventor: FUJIWARA, Tatsuo, Tokyo 108-0075 (JP)
(74) Representative: MFG Patentanwälte Meyer-Wildhagen Meggle-Freund Gerhard PartG mbB
(86) International application number: PCT/JP2017/043359
(87) International publication number: WO 2018/146922

(57) **Abstract**

[Object] To realize the input of three-dimensional information with a simple and intuitive operation.

[Solving Means] An information processing device includes: a first recognition unit that recognizes a first portion and a second portion different from the first portion of a body; and a second recognition unit that recognizes a user input according to a three-dimensional positional relationship on a real space between the recognized first portion and the second portion.

## Description

### Technical Field

The present disclosure relates to an information processing device, an information processing method, and a program.

### Background Art

In order to control the operation of so-called information processing devices such as PCs (Personal Computers) and game equipment, various systems have been proposed as user interfaces for acquiring input information from users. Particularly in recent years, various technologies in which voice of user's utterance or user's actions are recognized to use recognition results of the utterance or the actions to control information processing devices have also been proposed with the development of technologies such as acoustic analyses and image analyses. For example, Patent Literature 1 discloses an example of a technology for recognizing a user's action (so-called a gesture).

### Citation List

### Patent Literature

Patent Literature 1: Japanese Patent Application Laid-open No. 2014-99184

### Disclosure of Invention

### Technical Problem

Meanwhile, in recent years, it has become possible to present information that causes users to perceive a three-dimensional space with the development of AR (Augmented Reality) technologies or VR (Virtual Reality) technologies. From this background, it has been requested to provide, for example, user interfaces capable of realizing the input of three-dimensional information with a simpler operation such as when designating or adjusting positions or postures in the three-dimensional space of display information (for example, virtual objects) presented on the basis of the AR technologies or the VR technologies.

In view of this, the present disclosure proposes an information processing device, an information processing method, and a program capable of realizing the input of three-dimensional information with a simple and intuitive operation.

### Solution to Problem

According to the present disclosure, there is provided an information processing device including: a first recognition unit recognizing a first portion and a second portion different from the first portion of a body; and a second recognition unit recognizing a user input according to a three-dimensional positional relationship on a real space between the recognized first portion and the second portion.

Further, according to the present disclosure, there is provided an information processing method including: recognizing a first portion and a second portion different from the first portion of a body by a computer; and recognizing a user input according to a three-dimensional positional relationship on a real space between the recognized first portion and the second portion by the computer.

According to the present disclosure, there is provided a program that causes a computer to perform: recognition of a first portion and a second portion different from the first portion of a body; and recognition of a user input according to a three-dimensional positional relationship on a real space between the recognized first portion and the second portion.

### Advantageous Effects of Invention

As described above, the present disclosure provides an information processing device, an information processing method, and a program capable of realizing the input of three-dimensional information with a simple and intuitive operation.

Note that the above effect is not necessarily limitative and any effect described in the present specification or other effects graspable from the present specification may be produced together with or instead of the above effect.

### Brief Description of Drawings

[Fig. 1] Fig. 1 is a diagram for describing an example of the schematic configuration of an information processing system according to an embodiment of the present disclosure.
[Fig. 2] Fig. 2 is a diagram for describing an example of the schematic configuration of an input/output device according to the embodiment.
[Fig. 3] Fig. 3 is a diagram for describing the overview of a user interface in the information processing system according to the embodiment.
[Fig. 4] Fig. 4 is a diagram for describing the overview of the user interface in the information processing system according to the embodiment.
[Fig. 5] Fig. 5 is a diagram for describing the overview of the user interface in the information processing system according to the embodiment.
[Fig. 6] Fig. 6 is a diagram for describing the overview of the user interface in the information processing system according to the embodiment.
[Fig. 7] Fig. 7 is a block diagram showing an example of the functional configurations of the information processing system according to the embodiment.
[Fig. 8] Fig. 8 is a flowchart showing an example of the flow of a series of processing of the information processing system according to the embodiment.
[Fig. 9] Fig. 9 is a diagram for describing the overview of a gesture input according to a first modified example.
[Fig. 10] Fig. 10 is a diagram for describing the overview of the gesture input according to the first modified example.
[Fig. 11] Fig. 11 is a diagram for describing the overview of the gesture input according to the first modified example.
[Fig. 12] Fig. 12 is a diagram for describing the overview of a gesture input according to a second modified example.
[Fig. 13] Fig. 13 is a function block diagram showing a configuration example of the hardware configurations of an information processing device constituting a communication system according to the embodiment.

### Mode(s) for Carrying Out the Invention

Hereinafter, preferred embodiments of the present disclosure will be described in detail with reference to the accompanying drawings. Note that in the present specification and the drawings, constituents having substantially the same functional configurations will be shown by the same signs to omit their duplicated descriptions.

Note that the description will be given in the following order.
1. Schematic Configuration
   1.1. System Configuration
   1.2. Configuration of Input/Output Device
2. Consideration of User Interface
3. Overview of User Interface
4. Functional Configurations
5. Processing
6. Modified Examples
   6.1. First Modified Example: Example of Gesture Input (Part 1)
   6.2. Second Modified Example: Example of Gesture Input (Part 2)
   6.3. Third Modified Example: Example of Feedback
7. Example of Hardware Configurations
8. Conclusion

### <<1. Schematic Configuration>>

### <1.1. System Configuration>

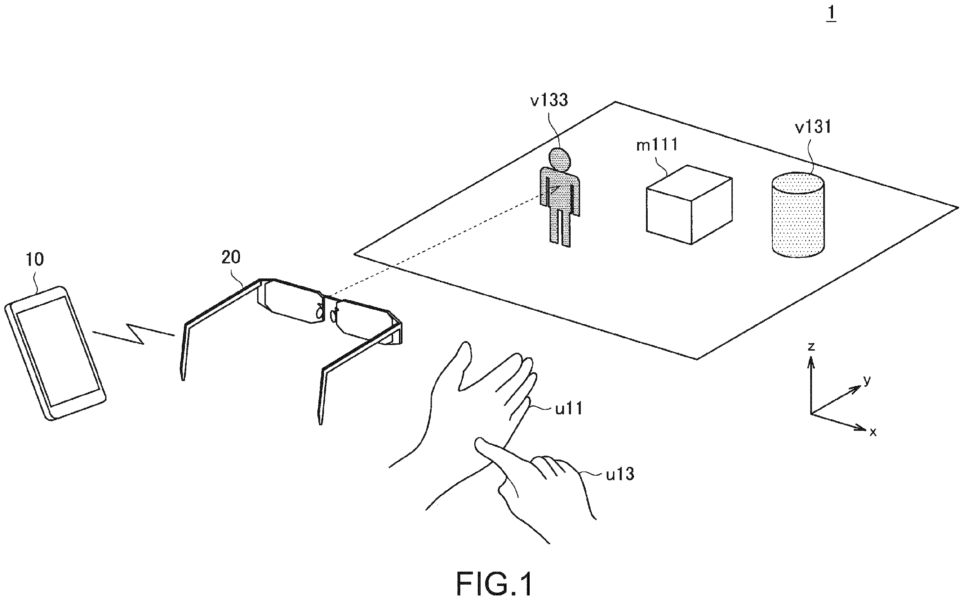

First, an example of the schematic configuration of an information processing system according to an embodiment of the present disclosure will be described with reference to Fig. 1. Fig. 1 is a diagram for describing an example of the schematic configuration of the information processing system according to the embodiment of the present disclosure and shows an example of a case in which various contents are presented to a user by the application of a so-called AR (Augmented Reality) technology.

In Fig. 1, reference sign m111 schematically shows an object (for example, a real object) positioned on a real space. Further, reference sign v131 and reference sign v133 schematically show virtual contents (for example, virtual objects) presented so as to overlap on the real space. That is, the information processing system 1 according to the present embodiment presents, on the basis of the AR technology, the virtual objects to a user in a state in which the virtual objects overlap, for example, an object on the real space such as the real object m111. Note that in Fig. 1, both the real object and the virtual objects are presented together for the purpose of making the characteristics of the information processing system according to the present embodiment more understandable.

As shown in Fig. 1, the information processing system 1 according to the present embodiment includes an information processing device 10 and an input/output device 20. The information processing device 10 and the input/output device 20 are configured to be capable of sending/receiving information each other via a prescribed network. Note that the type of the network connecting the information processing device 10 and the input/output device 20 to each other is not particularly limited. As a specific example, the network may be constituted by a so-called wireless network such as a network based on a Wi-Fi (TM) standard. Further, as another example, the network may be constituted by the Internet, a dedicated line, a LAN (Local Area Network), a WAN (Wide Area Network), or the like. Further, the network may include a plurality of networks, and at least some of the networks may be constituted as wired networks.

The input/output device 20 is a configuration for performing the acquisition of various input information and the presentation of various output information to the user who holds the input/output device 20. Further, the presentation of output information by the input/output device 20 is controlled by the information processing device 10 on the basis of input information acquired by the input/output device 20. For example, the input/output device 20 acquires information (a captured image of the real space) for recognizing the real object m111 as input information, and outputs the acquired information to the information processing device 10. The information processing device 10 recognizes the position of the real object m111 on the real space on the basis of the information acquired from the input/output device 20, and causes the input/output device 20 to present the virtual objects v131 and v133 on the basis of the recognition result. Under such control, the input/output device 20 is allowed to present, on the basis of the so-called AR technology, the virtual objects v131 and v133 to the user so that the virtual objects v131 and v133 overlap the real object m111.

Further, the input/output device 20 is constituted as, for example, a so-called head-mounted type device that is attached to at least a part of the head of the user in use, and may be configured to be capable of detecting the visual line of the user. Under such a configuration, the information processing device 10 may specify a target as an operation target, for example, when recognizing that the user watches carefully the desired target (for example, the real object m111, the virtual objects v131 and v133, or the like) on the basis of a detection result of the visual line of the user by the input/output device 20. Further, using a prescribed operation with respect to the input/output device 20 as a trigger, the information processing device 10 may specify a target to which the visual line of the user is directed as an operation target. In the manner described above, the information processing device 10 may specify an operation target and perform processing associated with the operation target to present various services to the user via the input/output device 20.

Further, the information processing device 10 may recognize the movement (for example, a change in position or direction, a gesture, or the like) of at least a portion of the body of the user as a user input on the basis of input information acquired by the input/output device 20, and perform various processing according to a recognition result of the user input. As a specific example shown in Fig. 1, the input/output device 20 acquires information (for example, captured images of a left hand u11 and a right hand u13) for recognizing the left hand u11 and the right hand u13 of the user as input information, and outputs the acquired information to the information processing device 10. The information processing device 10 recognizes the movement (for example, a gesture) of the left hand u11 and the right hand u13 on the basis of the information acquired from the input/output device 20, and recognizes instructions (that is, a user input) from the user according to a recognition result of the movement. Then, according to the recognition result of the user input, the information processing device 10 may control, for example, a display (for example, a display position or a posture of a virtual object) of the virtual object to be presented to the user.

Note that the input/output device 20 and the information processing device 10 are shown as devices different from each other in Fig. 1 but may be integrally configured. Further, the configurations and the processing of the input/output device 20 and the information processing device 10 will be separately described in detail.

The example of the schematic configuration of the information processing system according to the embodiment of the present disclosure is described above with reference to Fig. 1.

### <1.2. Configurations of Input/Output Device>

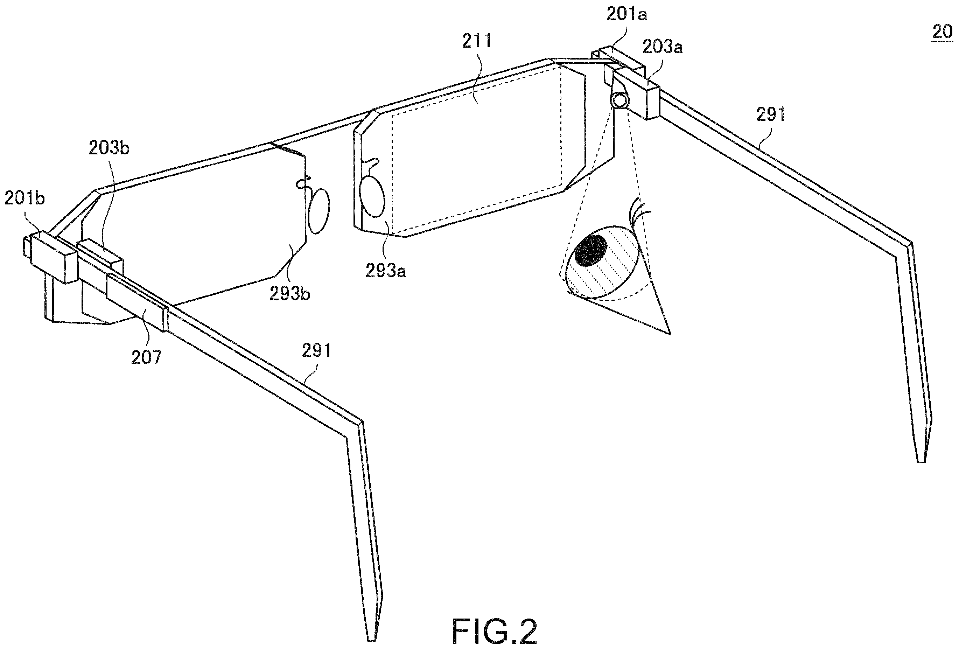

Subsequently, an example of the schematic configuration of the input/output device 20 according to the present embodiment shown in Fig. 1 will be described with reference to Fig. 2. Fig. 2 is a diagram for describing an example of the schematic configuration of the input/output device according to the present embodiment.

As described above, the input/output device 20 according to the present embodiment is constituted as a so-called head-mounted type device that is attached to at least a part of the head of a user in use. In an example shown in Fig. 2, the input/output device 20 is constituted as a so-called eyewear type (eyeglass type) device, and at least any of lenses 293a and 293b is constituted as a transmission type display (output unit 211). Further, the input/output device 20 includes first imaging units 201a and 201b, an operation unit 207, and a holding unit 291 corresponding to the frame of eyeglasses. Further, the input/output device 29 may also include second imaging units 203a and 203b. Note that various descriptions below will be given on the assumption that the input/output device 20 includes the second imaging units 203a and 203b. When the input/output device 20 is attached to the head of the user, the holding unit 291 holds the output unit 211, the first imaging units 201a and 201b, the second imaging units 203a and 203b, and the operation unit 207 so as to have a prescribed positional relationship with respect to the head of the user. Further, although not shown in Fig. 2, the input/output device 20 may also include a voice collection unit for collecting voice of the user.

Here, more specific configurations of the input/output device 20 will be described. In the example shown in Fig. 2, a lens 293a corresponds to a lens for a right eye, and a lens 293b corresponds to a lens for a left eye. That is, the holding unit 291 holds the output unit 211 so that the output unit 211 (in other words, the lenses 293a and 293b) is positioned in front of the eyes of the user when the input/output device 20 is attached.

The first imaging units 201a and 201b are constituted as so-called stereo cameras, and each held by the holding unit 291 so that the first imaging units 201a and 201b turn to a direction (that is, the front side of the user) to which the head of the user turns when the input/output device 20 is attached to the head of the user. At this time, the first imaging unit 201a is held near the right eye of the user, and the first imaging unit 201b is held near the left eye of the user. On the basis of such a configuration, the first imaging units 201a and 201b capture images of an object (in other words, a real object positioned on a real space) positioned in front of the input/output device 20 at positions different from each other. Thus, the input/output device 20 is allowed to acquire images of an object positioned in front of the user and calculate a distance from the input/output device 20 to the object on the basis of the parallax between the images captured by the respective first imaging units 201a and 201b.

Note that a configuration or a method is not particularly limited so long as the distance between the input/output device 20 and an object is measurable. As a specific example, the distance between the input/output device 20 and an object may be measured on the basis of a method such as a multi-camera stereo, movement parallax, TOF (Time of Flight), and Structured Light. Here, the TOF represents a method in which light such as infrared light is illuminated onto an object and a time until the illuminated light returns after being reflected by the object is measured for each pixel, whereby an image (so-called a distance image) including a distance (depth) to the object is obtained on the basis of the measurement result. Further, the Structured Light represents a method in which an object is irradiated with a pattern by light such as infrared light and an image of the pattern is captured, whereby a distance image including a distance (depth) to the object is obtained on the basis of a change in the pattern obtained from a capturing result. Further, the movement parallax represents a method for measuring a distance to an object on the basis of parallax even in a so-called single lens camera. Specifically, a camera is moved to capture images of an object at viewpoints different from each other, and a distance to the object is measured on the basis of the parallax between the captured images. Note that the recognition of the movement distance and the movement direction of the camera with various sensors at this time makes it possible to more accurately measure the distance to the object. Note that the configuration of an imaging unit (for example, a single lens camera, a stereo camera, or the like) may be changed according to a method for measuring the distance.

Further, the second imaging units 203a and 203b are held by the holding unit 291 so that the eyes of the user are positioned within respective imaging ranges when the input/output device 20 is attached to the head of the user. As a specific example, the second imaging unit 203a is held so that the right eye of the user is positioned within an imaging range. Under such a configuration, it becomes possible to recognize a direction to which the visual line of the right eye turns on the basis of an image of the eyeball of the right eye that is captured by the second imaging unit 203a and the positional relationship between the second imaging unit 203a and the right eye. Similarly, the second imaging unit 203b is held so that the left eye of the user is positioned within an imaging range. That is, it becomes possible to recognize a direction to which the visual line of the left eye turns on the basis of an image of the eyeball of the left eye that is captured by the second imaging unit 203b and the positional relationship between the second imaging unit 203b and the left eye. Note that the example shown in Fig. 2 describes a configuration in which the input/output device 20 includes both the second imaging units 203a and 203b, but only any of the second imaging units 203a and 203b may be provided.

The operation unit 207 is a configuration for receiving an operation from the user with respect to the input/output device 20. The operation unit 207 may be constituted by, for example, an input device such as a touch panel and a button. The operation unit 207 is held at a prescribed position of the input/output device 20 by the holding unit 291. In the example shown in Fig. 2, the operation unit 207 is held at a position corresponding to the temple of the eyeglasses.

Further, the input/output device 20 according to the present embodiment may be provided with, for example, an acceleration sensor or an angular speed sensor (gyro sensor) and configured to be capable of detecting the movement of the head of the user to which the input/output device 20 is attached (in other words, the movement of the input/output device 20 itself). As a specific example, the input/output device 20 may detect a component in each of a yaw direction, a pitch direction, and a roll direction as the movement of the head of the user to recognize a change in any of a position and a posture of the head of the user.

Under the configurations described above, the input/output device 20 according to the present embodiment is allowed to recognize a change in its own position or posture on the real space according to the movement of the head of the user. Further, at this time, the input/output device 20 is also allowed to present a virtual content to the output unit 211 on the basis of a so-called AR technology so that the virtual content (that is, a virtual object) overlaps a real object positioned on the real space. Note that an example of a method (that is, own-position estimation) for estimating an own position and a posture on the real space by the input/output device 20 will be separately described in detail later.

Note that examples of a head-mounted type display device (HMD: Head Mounted Display) applicable as the input/output device 20 include a see-through type HMD, a video see-through type HMD, and a retinal projection type HMD.

The see-through type HMD holds a virtual-image optical system composed of a transparent light guidance unit or the like in front of the eyes of the user with, for example, a half mirror or a transparent light guidance plate, and causes an image to be displayed inside the virtual-image optical system. Therefore, the user having the see-through type HMD attached thereto is allowed to bring an outside landscape into his/her view while viewing an image displayed inside the virtual-image optical system. Under such a configuration, the see-through type HMD is also allowed to cause an image of a virtual object to overlap an optical image of a real object positioned on a real space according to a recognition result of at least any of a position and a posture of the see-through type HMD on the basis of, for example, an AR technology. Note that a specific example of the see-through type HMD includes a so-called eyeglass type wearable device in which portions corresponding to the lenses of eyeglasses are constituted as virtual-image optical systems. For example, the input/output device 20 shown in Fig. 2 corresponds to an example of the see-through type HMD.

The video see-through type HMD is attached so as to cover the eyes of the user when attached to the head or the face of the user, and a display unit such as a display is held in front of the eyes of the user. Further, the video see-through type HMD has an imaging unit for capturing an image of a surrounding landscape and causes the image of the landscape in front of the user captured by the imaging unit to be displayed on the display unit. Under such a configuration, the user having the video see-through type HMD attached thereto has a difficulty in directly bringing an outside landscape into his/her view but is allowed to confirm the outside landscape through an image displayed on the display unit. Further, at this time, the video see-through type HMD may cause a virtual object to overlap an image of the outside landscape according to a recognition result of at least any of a position and a posture of the video see-through type HMD on the basis of, for example, an AR technology.

The retinal projection type HMD holds a projection unit in front of the eyes of the user, and causes an image to be projected from the projection unit onto the eyes of the user so that the image overlaps an outside landscape. More specifically, the retinal projection type HMD causes an image to be directly projected onto the retinas of the eyes of the user from the projection unit to be formed thereon. Under such a configuration, even a near-sighted or farsighted user is also allowed to view a clearer image. Further, the user having the retinal projection type HMD attached thereto is allowed to bring an outside landscape into his/her view while viewing an image projected from the projection unit. Under such a configuration, the retinal projection type HMD is also allowed to cause an image of a virtual object to overlap an optical image of a real object positioned on a real space according to a recognition result of at least any of a position and a posture of the retinal projection type HMD on the basis of, for example, an AR technology.

Further, an example of the configurations of the input/output device 20 according to the present embodiment is described above on the assumption that an AR technology is applied, but the configurations of the input/output device 20 are not limited to the example. For example, when it is assumed that a VR technology is applied, the input/output device 20 according to the present embodiment may be constituted as a HMD called an immersive type HMD. The immersive type HMD is attached so as to cover the eyes of the user like the video see-through type HMD, and causes a display unit such as a display to be held in front of the eyes of the user. Therefore, the user having the immersive type HMD attached thereto has a difficulty in directly bringing an outside landscape (that is, a landscape in a real world) into his/her view and brings only an image displayed on the display unit into the view. Under such a configuration, the immersive type HMD is allowed to present an immersion feeling to the user viewing an image.

The example of the schematic configuration of the input/output device according to the embodiment of the present disclosure is described above with reference to Fig. 2.

### <<2. Consideration of User Interface>>

Subsequently, after the consideration of a user interface assuming a case in which information is presented to a user by an AR technology, a VR technology, or the like, the problem of an information processing device according to the present embodiment will be organized.

In recent years, it has become possible to present not only conventional two-dimensional information but also information that allows a user to perceive a three-dimensional space in a mode closer to reality with the development of an AR technology or a VR technology. As a more specific example, the application of an AR technology makes it possible to present display information to a user just like virtual display information exists on a real space. Note that in the following description, an object such as an object existing on a real space will also be called a "real object," and a virtual object such as display information presented via an output unit such as a display will also be called a "virtual object."

From the above background, a situation in which not only a conventional two-dimensional operation but also a three-dimensional operation such as designation or adjustment of a three-dimensional position or a posture of a virtual object presented by an AR technology or a VR technology are requested could also be, for example, assumed as a user input. On the other hand, a conventional user interface may assume a situation in which information displayed on a screen is two-dimensionally operated. When a three-dimensional operation as described above is realized by such an interface, the operation becomes complicated in some cases.

In view of this problem, the present disclosure will propose an example of a user interface capable of realizing the input of three-dimensional information with a simpler and intuitive operation according to a gesture input in which instructions from a user are recognized on the basis of a recognition result of the operation (gesture) of the user.

### <<3. Overview of User Interface>>

Subsequently, the overview of a user interface in the information processing system according to the present embodiment will be described.

In the information processing system according to the present embodiment, a user is allowed to input various information to the information processing system according to a gesture input in which a plurality of portions different from each other among the respective portions of the body of the user is used in combination. Note that in order to make the characteristics of the information processing system according to the present embodiment more understandable, an example of a user interface in which the user inputs various information according to a gesture input in which the left hand and the right hand of the user are used in combination will be described here.

For example, in the information processing system according to the present embodiment, a recognition result of a three-dimensional direction (posture) on a real space of a user's hand may be used to recognize a user input.

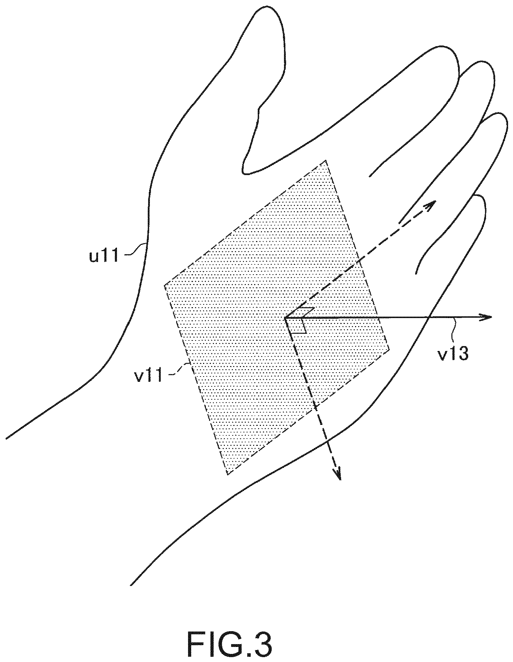

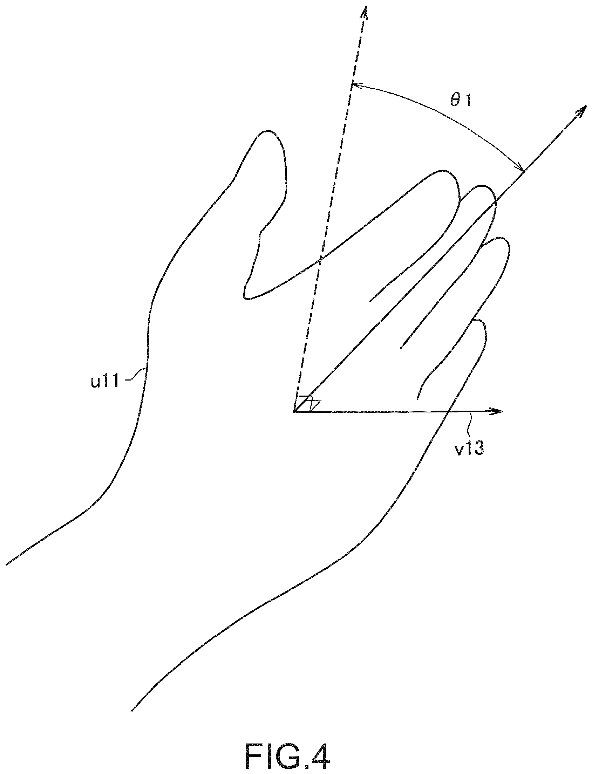

For example, Figs. 3 and 4 are diagrams for describing the overview of the user interface in the information processing system according to the present embodiment. As shown in Fig. 3, the recognition of a three-dimensional direction on a real space of a user's hand u11 makes it possible to stipulate a plane v11 extending along the palm of the hand u11 and a normal line v13 of the plane 11. Further, as shown in Fig. 4, the recognition of a three-dimensional direction on the real space of the user's hand u11 makes it possible to recognize a rotation angle θ1 of roll rotation with the normal line v13 of the plane v11 extending along the palm of the hand u11 as an axis.

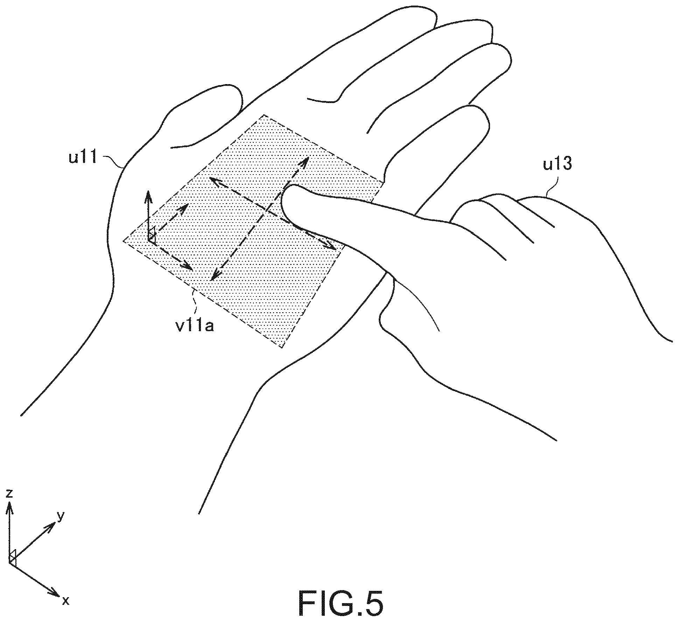

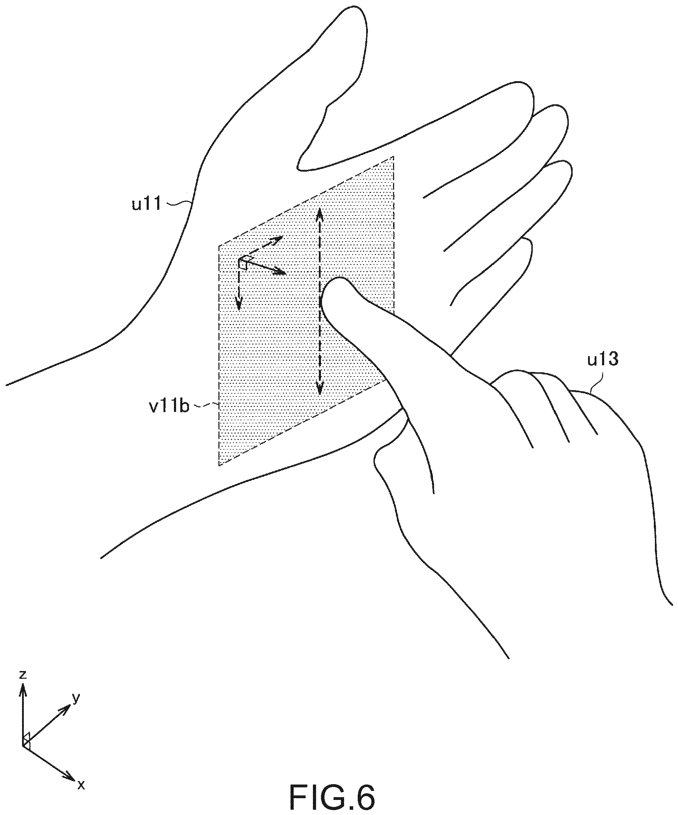

Here, an example of a user interface capable of realizing a three-dimensional operation with the use of a recognition result of the three-dimensional direction (posture) on a real space of a user's hand as described above will be described with reference to Figs. 5 and 6. Figs. 5 and 6 are diagrams for describing the overview of the user interface in the information processing system according to the present embodiment. Note that in the present description, directions substantially parallel to a horizontal plane on a real space and orthogonal to each other will also be called an x-direction and a y-direction, and a vertical direction (that is, a direction orthogonal to each of the x-direction and the y-direction) on the real space will also be called a z-direction.

In examples shown in Figs. 5 and 6, a plane v11 is stipulated by the palm of one hand u11 among the left hand u11 and a right hand u13, and a position on the plane v11 is designated by a touch operation of a finger of the other hand u13 on the palm of the hand u11.

For example, Fig. 5 shows an example of a case in which the one hand u11 is held in its open state so that the palm is substantially parallel to a horizontal plane (that is, an xy plane) on the real space and in which the operation of tracing the palm of the hand u11 with a finger of the other hand u13 is performed. In this state, the information processing device 10 according to the present embodiment recognizes the shape of the one hand u11 on the basis of various information acquired by the input/output device 20 or the like, and recognizes the open state of the hand u11 according to the recognition result. Further, the information processing device 10 recognizes a direction of the palm of the hand u11 on the basis of the acquired input information, and stipulates the plane v11a extending along the palm according to the recognition result. Note that in the example shown in Fig. 5, the plane v11a is stipulated as a plane substantially parallel to the horizontal plane (the xy plane) on the real space.

Further, the information processing device 10 recognizes the shape of the other hand u13 on the basis of various input information acquired by the input/output device 20 or the like, and recognizes a finger of the hand u13 according to the recognition result. Further, when recognizing that the finger of the other hand u13 contacts or comes close to the palm of the one hand u11 on the basis of the acquired input information, the information processing device 10 recognizes a user input according to the three-dimensional positional relationship (in other words, the relative positional relationship) between the hand u11 and the hand u13. In the example shown in Fig. 5, the information processing device 10 recognizes that a corresponding position on the plane v11a stipulated according to a direction of the palm is designated as a user input on the basis of a position of the palm of the hand u11 where the finger of the hand u13 contacts or to which the finger of the hand u13 comes close. In other words, in the example shown in Fig. 5, the information processing device 10 associates the direction of the palm of the hand u11 with a coordinate system on the real space, and recognizes the movement of the finger of the hand u13 that moves so as to trace the palm of the hand u11 as an operation toward a direction substantially parallel to the horizontal plane on the real space.

Further, as another example, Fig. 6 shows an example of a case in which the one hand u11 is held in its open state so that the palm is substantially perpendicular to the horizontal plane on the real space and in which the operation of tracing the palm of the hand u11 with a finger of the other hand u13 is performed. In this case, the information processing device 10 according to the present embodiment recognizes the open state of the one hand u11 on the basis of the same method as that of the example described with reference to Fig. 5, and recognizes a direction of the palm of the hand u11 to stipulate the plane v11b. Note that in the example shown in Fig. 6, the plane v11b is stipulated as a plane substantially perpendicular to the horizontal plane (that is, the xy plane) on the real space.

Further, when recognizing the finger of the other hand u13 and recognizing that the finger of the hand u13 contacts or comes close to the palm of the hand u11 on the basis of the same method as that of the example described with reference to Fig. 5, the information processing device 10 recognizes a user input according to the three-dimensional positional relationship between the hand u11 and the hand u13. In the example shown in Fig. 6, the information processing device 10 recognizes that a corresponding position on the plane v11b stipulated according to a direction of the palm is designated as a user input on the basis of a position of the palm of the hand u11 where the finger of the hand u13 contacts. In other words, in the example shown in Fig. 6, the information processing device 10 recognizes the movement of the finger of the hand u13 that moves so as to trace the palm of the hand u11 as an operation toward a direction substantially parallel to a plane substantially perpendicular to the horizontal plane on the real space.

Under the above control, the user is allowed to adjust a position or a posture of a virtual object by, for example, the operations as shown in Figs. 5 and 6. As a specific example, when moving a virtual object as an operation target in a horizontal direction, the user may only horizontally hold the one hand u11 in its open state and perform the operation of tracing the palm of the hand u11 with a finger of the other hand u13 as shown in Fig. 5. In this case, the user is allowed to designate a change in position on the plane substantially parallel to the horizontal plane (that is, the xy plane) or a change in position along a direction parallel to the horizontal plane according to a position or the movement of the finger of the hand u13 on the palm of the hand u11.

Further, when moving a virtual object as an operation target in a height direction (that is, a vertical direction, in other words, the z-direction), the user may only horizontally hold the one hand u11 in its open state and perform the operation of tracing the palm of the hand u11 with a finger of the other hand u13 as shown in Fig. 6. In this case, the user is allowed to designate a change in position in the height direction (that is, the vertical direction) or a change in position along the height direction according to a position or the movement of the finger of the hand u13 on the palm of the hand u11. Further, by appropriately changing a direction of the palm of the hand u11 into the states shown in Figs. 5 and 6, the user is allowed to designate the change in position along the direction parallel to the horizontal plane and the change in position along the vertical direction as a series of successive operations. Therefore, the user interface according to the present embodiment eliminates the need to perform a complicated operation such as switching an operation interface (for example, an icon, a cursor, or the like) depending on any of an operation along a direction parallel to the horizontal plane and an operation along the vertical direction.

Note that when the palm of the one hand u11 is held so as to be inclined with respect to the horizontal plane, the information processing device 10 may determine whether the hand u11 is put in any of the states shown in Figs. 5 and 6 according to an angle of the palm with respect to the horizontal plane. For example, when a direction of the palm is closer to the direction of the horizontal plane, the information processing device 10 may recognize that the plane v11a substantially parallel to the horizontal plane is stipulated by the hand u11 as shown in Fig. 5. Further, when a direction of the palm is closer to the direction of the perpendicular plane, the information processing device 10 may recognize that the plane v11b substantially perpendicular to the horizontal plane is stipulated by the hand u11 as shown in Fig. 6.

Further, as another example, when the palm of the one hand u11 is held so as to be inclined with respect to the horizontal plane, the information processing device 10 may stipulate a plane v11 according to a direction of the palm, that is, the plane v11 inclined with respect to the horizontal plane. In this case, the information processing device 10 may recognize a position or the movement of a finger of the hand u13 on the palm of the hand u11 as a change in position along the plane v11 inclined with respect to the horizontal plane or a change in position along a direction parallel to the plane v11.

The overview of the user interface in the information processing system according to the present embodiment is described above with reference to Figs. 3 to 6.

### <<4. Functional Configurations>>

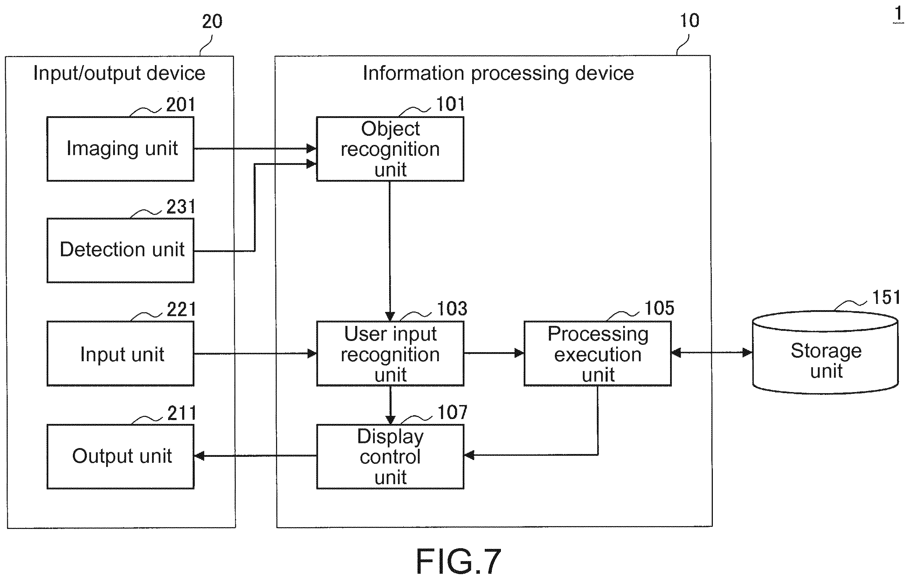

Subsequently, an example of the functional configurations of the information processing system 1 according to the present embodiment will be described with reference to Fig. 7. Fig. 7 is a block diagram showing the example of the functional configurations of the information processing system according to the present embodiment.

As shown in Fig. 7, the information processing system 1 according to the present embodiment includes the input/output device 20, the information processing device 10, and a storage unit 151. Note that the input/output device 20 and the information processing device 10 shown in Fig. 7 correspond to the input/output device 20 and the information processing device 10 described with reference to Fig. 1, respectively.

First, the configurations of the input/output device 20 will be described. As shown in Fig. 7, the input/output device 20 includes an imaging unit 201, a detection unit 231, an input unit 221, and an output unit 211. Note that the output unit 211 corresponds to the output unit 211 in Fig. 2.

The imaging unit 201 corresponds to the first imaging units 201a and 201b constituted as stereo cameras in Fig. 2. That is, the imaging unit 201 captures an image of an object (subject) on a real space, and outputs the captured image to the information processing device 10.

The detection unit 231 schematically shows a configuration on the acquisition of information for detecting the movement of the head of a user having the input/output device 20 attached thereto or a direction (hereinafter also called a "visual line direction") to which the visual line of the user turns. Specifically, the detection unit 231 may include various sensors such as an acceleration sensor and an angular speed sensor, and acquire detection results by the sensors as information for detecting a change in position or posture of the input/output device 20 (eventually, the movement of the head of the user having the input/output device 20 attached thereto). Further, the detection unit 231 may include the second imaging units 203a and 203b described with reference to Fig. 2, and acquire images of the eyeballs of the user that are captured by the imaging units as information for detecting the visual line of the user. Then, the detection unit 231 outputs the acquired information to the information processing device 10.

The input unit 221 is a configuration for acquiring information input from the user with respect to the input/output device 20. Specifically, the input unit 221 may include the operation unit 207 described with reference to Fig. 2. Further, the input unit 221 may include a voice collection unit for collecting voice of the user, and acquire the voice of the user that is input to the voice collection unit as information input from the user. Note that the example described above is given only for exemplification, and a type of a configuration (for example, an input device) included in the input unit 221 is not particularly limited so long as the configuration allows the user to input information to the input/output device 20. Then, the input unit 221 outputs the acquired information to the information processing device 10.

Next, the configurations of the information processing device 10 will be described. As shown in Fig. 7, the information processing device 10 includes an object recognition unit 101, a user input recognition unit 103, a processing execution unit 105, and a display control unit 107.

The object recognition unit 101 acquires a captured image from the imaging unit 201 and applies prescribed analysis processing to the acquired image to recognize an object (subject) on a real space captured in the image. As a specific example, the object recognition unit 101 acquires images (hereinafter also called "stereo images") captured at a plurality of viewpoints different from each other from the imaging unit 201 constituted as a stereo camera, and measures distances to an object captured in the images for each pixel of the images on the basis of the parallax between the acquired images. Note that in the following description, information indicating distances to an object captured in images that are measured for each pixel will also be called "depth information." On the basis of the depth information thus acquired, the object recognition unit 101 is allowed to estimate or recognize the relative positional relationship (particularly, the positional relationship in a depth direction) on the real space between the imaging unit 201 (eventually, the input/output device) and each of the objects captured in the images.

Further, the object recognition unit 101 is allowed to recognize a portion of the body of a user as an object on the real space. Specifically, the object recognition unit 101 may only recognize a portion of the body of the user on the basis of the distribution of depth information, the intensity of colors or shades in captured images, the contour (in other words, the edge) of an object detected from the images, or the like. As a more specific example, the object recognition unit 101 is allowed to detect a shape (for example, a contour) peculiar to a hand or a finger from captured images to recognize the hand of the user captured in the images. Further, the object recognition unit 101 is also allowed to recognize a direction (in other words, a direction of the palm) of a hand of the user on the basis of the distribution of depth information.

Further, the object recognition unit 101 may use a technology so-called SLAM (simultaneous localization and mapping) for self-position estimation. The SLAM represents a technology in which self-position estimation and environmental-map creation are simultaneously performed using an imaging unit such as a camera, various sensors, an encoder, or the like. As a more specific example, the SLAM (particularly, Visual SLAM) successively restores a three-dimensional shape of a captured scene (or a subject) on the basis of a moving image captured by an imaging unit. Then, a restoration result of the captured scene is associated with detection results of a position and a posture of the imaging unit, whereby the creation of a surrounding environmental map and the estimation of the position and the posture of the imaging unit (eventually, the input/output device 20) in the environment are performed. Note that with the provision of, for example, various sensors such as an acceleration sensor and an angular speed sensor in the input/output device 20, it is possible to estimate the position and the posture of the imaging unit as information indicating relative changes on the basis of detection results of the sensors. Of course, the method is not necessarily limited to a method based on detection results of various sensors such as the acceleration sensor and the angular speed sensor so long as the estimation of the position and the posture of the imaging unit is allowed.

Under the above configuration, the object recognition unit 101 may perform self-position estimation and environmental-map creation on the basis of the SLAM to recognize the positional relationship on the real space between the input/output device 20 and an object captured in an image. In this case, the object recognition unit 101 may acquire information indicating changes in position and posture of the input/output device 20 from the detection unit 230 and use the information for self-position estimation based on the SLAM.

In the manner described above, the object recognition unit 101 recognizes an object on the real space on the basis of an image captured by the imaging unit 201, and outputs information indicating the recognition result to the user input recognition unit 103. Note that the object recognition unit 101 corresponds to an example of a "first recognition unit."

The user input recognition unit 103 acquires information indicating a recognition result of an object on the real space from the object recognition unit 101, and uses a recognition result of at least a prescribed portion (that is, a portion used for a gesture input) of the portions of the body of the user among the respective object recognition results included in the information for the recognition of a user input. Particularly, in the information processing system 1 according to the present embodiment, the user input recognition unit 103 uses recognition results of a plurality of portions different from each other among the portions of the body of the user, that is, a recognition result of a first portion and a recognition result of a second portion different from the first portion for the recognition of the user input. As a more specific example, the user input recognition unit 103 recognizes a user input according to each shape of the left hand u11 and the right hand u13 of the user or the three-dimensional positional relationship between the hand u11 and the hand u13 as in the example described with reference to Figs. 5 and 6.

Note that portions used for the recognition of a user input (that is, portions used for a gesture input) are not limited to the left hand u11 and the right hand u13 so long as the recognition of the user input is allowed according to the three-dimensional positional relationship between a plurality of portions different from each other. As a specific example, a user input may be recognized according to the three-dimensional positional relationship between any of right and left hands and any of right and left legs.

Further, the user input recognition unit 103 may recognize a user input according to the three-dimensional positional relationship between a plurality of portions when the plurality of portions used for the gesture input contacts or comes close to each other. Under such control, an opportunity at which a user input is recognized is limited to a case in which a plurality of portions used for a gesture input contacts or comes close to each other. Therefore, it becomes possible to prevent the occurrence of an event in which a user input is falsely recognized on the basis of the operation of the user when the user inputs information to the information processing device 10 at an unintended opportunity.

Further, the user input recognition unit 103 may selectively switch a condition on the recognition of a user input according to a recognition result of a portion of the body of the user (in other words, the correspondence between a gesture and the user input) according to a prescribed condition. As a specific example, the user input recognition unit 103 may selectively switch a condition on the recognition of a user input according to instructions from the user via the input unit 221. Further, as another example, the user input recognition unit 103 may recognize a prescribed state or a situation with various sensors or the like and automatically switch a condition on the recognition of a user input according to the recognition result. Note that another example of a condition on the recognition of a user input, that is, another example of a gesture input according to the present embodiment will be separately described later as a modified example.

Then, the user input recognition unit 103 outputs information indicating a recognition result of a user input to an output destination (for example, the processing execution unit 105, the display control unit 107, or the like) according to the recognized user input. As a specific example, the user input recognition unit 103 outputs the information indicating the recognition result of the user input to the processing execution unit 105 when the recognized user input provides instructions for performing a prescribed function such as an application. Further, the user input recognition unit 103 outputs the information indicating the recognition result of the user input to the display control unit 107 when the recognized user input is related to display control such as the adjustment of a position or a posture of a virtual object.

The processing execution unit 105 is a configuration for performing various functions (for example, applications) provided by the information processing device 10 (eventually, the information processing system 1). The processing execution unit 105 may extract a corresponding application from a prescribed storage unit (for example, the storage unit 151 that will be described later) according to a recognition result of a user input by the user input recognition unit 103 and perform the extracted application. Further, the processing execution unit 105 may output information indicating execution results of the various applications to the display control unit 107.

The display control unit 107 causes various display information as an output target to be output to the output unit 211 to present the display information to the user.

As a specific example, the display control unit 107 may cause a virtual object to be output to the output unit 211 so that the virtual object overlaps the real space on the basis of an AR technology. Note that in this case, the display control unit 107 may acquire information indicating a recognition result of a position on the real space of each object (real object) captured in an image by the imaging unit 201 from the object recognition unit 101. Thus, the display control unit 107 is allowed to recognize a position of a real object on the real space and control a display position of a virtual object so that the virtual object overlaps a desired position on the real space on the basis of the recognition result.

Further, the display control unit 107 may control the output of display information to the output unit 211 according to a recognition result of a user input by the user input recognition unit 103. For example, the display control unit 107 may control a position or a direction for presenting display information according to a recognition result of a user input. As a more specific example, the display control unit 107 is also allowed to three-dimensionally control a position at which a virtual object is presented or a direction of the virtual object according to a recognition result of a user input when presenting a virtual object on the basis of an AR technology. In this case, the display control unit 107 may only determine a three-dimensional direction in which the virtual object is moved or a movement amount of the virtual object according to the recognition result of the user input and control the position at which the virtual object is presented or the direction of the virtual object according to the determined direction or the movement amount.

Further, the display control unit 107 occasionally acquires information indicating execution results of various applications from the processing execution unit 105. In this case, the display control unit 107 may cause the information indicating the execution results of the applications to be output to the output unit 211 to present the information to the user.

The storage unit 151 is a storage region for temporarily or permanently storing various data. For example, the storage unit 151 may store data with which the information processing device 10 performs various functions. As a more specific example, the storage unit 151 may store data (for example, a library) for performing various applications, management data for managing various settings, or the like.

Note that the functional configurations of the information processing system 1 shown in Fig. 7 are given only for exemplification and are not necessarily limited to the example shown in Fig. 7 so long as it is possible to realize the processing of the respective configurations described above. As a specific example, the input/output device 20 and the information processing device 10 may be integrally configured. Further, as another example, the storage unit 151 may be included in the information processing device 10, or may be configured as an external recording medium of the information processing device 10 (for example, a recording medium external to the information processing device 10). Further, as another example, some of the respective configurations of the information processing device 10 may be provided on the outside (for example, a server or the like) of the information processing device 10.

The example of the functional configurations of the information processing system 1 according to the present embodiment is described above with reference to Fig. 7.

### <<5. Processing>>

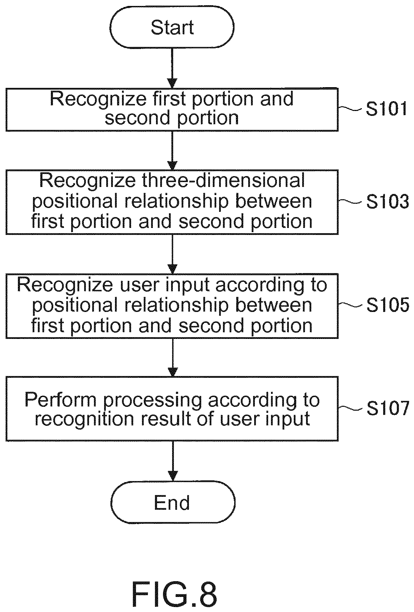

Subsequently, an example of the flow of a series of processing of the information processing system 1 according to the present embodiment will be described with attention particularly paid to processing related to the recognition of a user input by the information processing device 10. For example, Fig. 8 is a flowchart showing an example of the flow of the series of processing of the information processing system according to the present embodiment.

As shown in Fig. 8, the information processing device 10 (the object recognition unit 101) applies prescribed analysis processing to an image captured by the imaging unit 201 to recognize a first portion and a second portion different from the first portion used for a gesture input (S101). As a more specific example, the information processing device 10 recognizes, in the case of the examples described with reference to Figs. 5 and 6, the left hand u11 and the right hand u13 as a first portion and a second portion used for a gesture input, respectively.

Next, the information processing device 10 (the user input recognition unit 103) recognizes each shape of the first portion and the second portion and the three-dimensional positional relationship on a real space between the first portion and the second portion (S103), and recognizes a user input according to the recognition results (S105). For example, the information processing device 10 may stipulate a coordinate system according to a three-dimensional direction on the real space of the first portion and recognize that a position, a direction, a distance, or the like on the coordinate system has been designated according to the relative positional relationship between the first portion and the second portion.

Then, the information processing device 10 performs processing according to a recognition result of the user input (S107). As a specific example, the information processing device 10 (the processing execution unit 105) may perform a corresponding application according to the recognition result of the user input. Further, as another example, the information processing device 10 (the display control unit 107) may control, according to the recognition result of the user input, a position or a direction (particularly, a three-dimensional position or a direction) in which display information such as a virtual object is presented.

The example of the flow of the series of processing of the information processing system 1 according to the present embodiment is described above with attention particularly paid to the processing related to the recognition of the user input by the information processing device 10 with reference to Fig. 8.

### <<6. Modified Examples>>

Subsequently, modified examples of the information processing system 1 according to the present embodiment will be described.

### <6.1. First Modified Example: Example of Gesture Input (Part 1)>

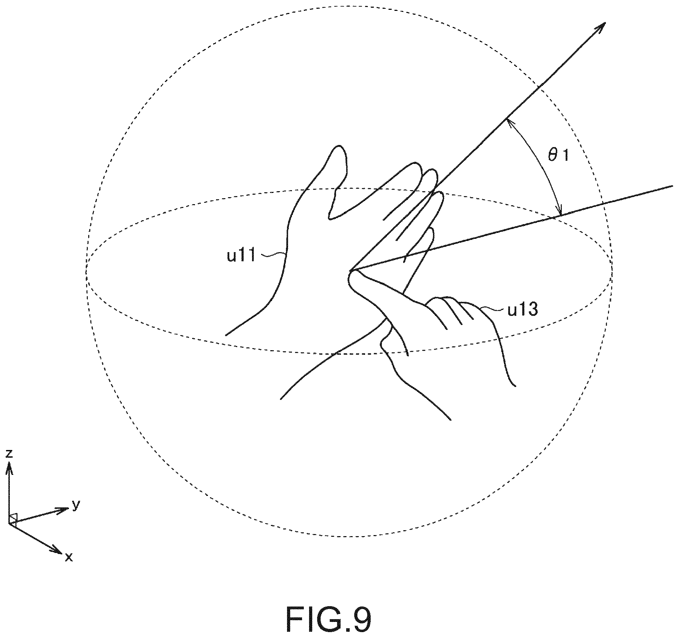

First, as a first modified example, an example of a gesture input using right and left hands will be described. For example, Figs. 9 to 11 are diagrams for describing the overview of a gesture input according to the first modified example.

In the information processing system 1 according to the first modified example, the information processing device 10 recognizes, as described with reference to Fig. 4, a user input according to a recognition result of the rotation angle θ1 of roll rotation with the normal line v13 of the plane v11 extending along the palm of the hand u11 of the user as an axis. Specifically, as shown in Fig. 9, the information processing device 10 recognizes the rotation angle θ1 of the hand u11 in a state in which at least a part (for example, a finger) of the other hand u13 contacts or comes close to at least a part (for example, the palm) of the one hand u11. At this time, the information processing device 10 may recognize the rotation angle θ1 of the hand u11 according to a recognition result of a relative direction (for example, a recognition result of a change in relative direction) of the one hand u11 with respect to the other hand u13. Further, as another example, the information processing device 10 may recognize the rotation angle θ1 according to an actual direction of the hand u11 on the real space (in other words, a direction of the hand u11 in an absolute coordinate system on the real space, for example, an elevation angle with respect to the horizontal plane). Then, the information processing device 10 recognizes the user input according to a recognition result of the rotation angle θ1.

Specifically, the information processing device 10 recognizes a direction in which a virtual object v201 is moved according to a rotation direction of the hand u11, and recognizes a movement amount of the virtual object v201 according to the rotation angle θ1 of the hand u11.

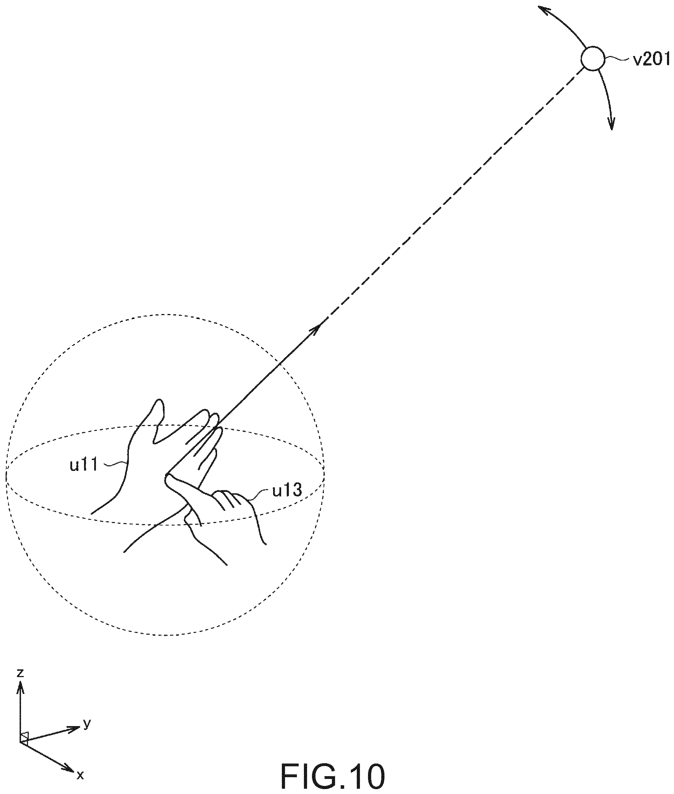

For example, Fig. 10 shows an example of a case in which a position at which the virtual object v201 is presented is adjusted on the basis of the gesture input described with reference to Fig. 9. In the example shown in Fig. 10, the information processing device 10 sets a prescribed position as a reference point, and causes the virtual object v201 as an operation target to rotate and move about the reference point according to recognition results of the rotation direction and the rotation angle θ1 of the hand u11. As a more specific example, the information processing device 10 may cause, when recognizing that the hand u11 has rotated in an elevation direction, the virtual object v201 to rotate and move in the elevation direction about the reference point according to the rotation angle θ1 of the hand u11. Note that in the example shown in Fig. 10, a method for setting the reference point (that is, the center of the rotation and movement) is not particularly limited. As a specific example, a position on the ground at which the user stands may be set as the reference point. Further, as another example, a position of at least a partial portion of the user such as a position of the head of the user may be set as the reference point. Further, the center of the viewpoint of the user may be set as the reference point. Further, as another example, a position of the reference point may be set on the basis of a prescribed user input.

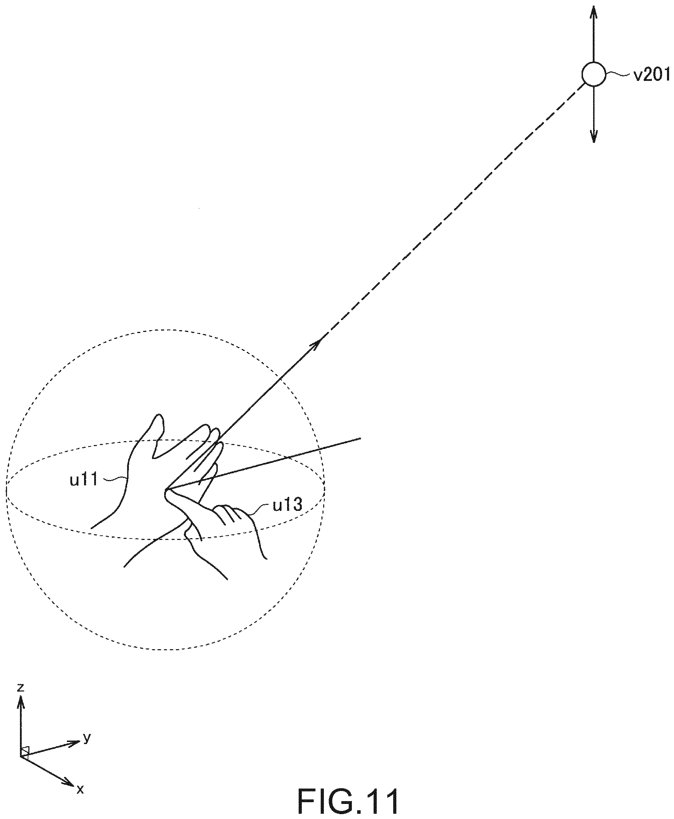

Further, Fig. 11 shows another example of the case in which the position at which the virtual object v201 is presented is adjusted on the basis of the gesture input described with reference to Fig. 9. In the example shown in Fig. 10, the information processing device 10 causes the virtual object v201 as an operation target to move in parallel according to recognition results of the rotation direction and the rotation angle θ1 of the hand u11. As a more specific example, the information processing device 10 may cause, when recognizing that the hand u11 has rotated in an elevation direction, the virtual object v201 to move in parallel in a vertical direction (that is, a height direction) according to the rotation angle θ1 of the hand u11.

Note that the examples described with reference to Figs. 10 and 11 are given only for exemplification, and that the method is not particularly limited so long as a position or a direction (posture) in which display information (for example, the virtual object v201) as an operation target is presented is adjusted according to the rotation direction and the rotation angle θ1 of the hand u11.

Further, the above examples describe the cases in which the right and left hands are used for the gesture input. However, when a plurality of portions is used for the gesture input, at least one of the plurality of portions may be a portion other than a hand.

Further, it is also possible to combine together the gesture inputs according to the first modified example and the gesture inputs described with reference to Figs. 5 and 6. As a specific example, the information processing device 10 may recognize a user input according to recognition results of a three-dimensional direction on the real space of the one hand u11 and the relative positional relationship between the one hand u11 and the other hand u13. Further, at this time, the information processing device 10 may recognize the user input according to a three-dimensional position on the real space of the one hand u11 in addition to the three-dimensional direction on the real space of the one hand u11. The same applies to the examples described with reference to Figs. 5 and 6.

For example, the information processing device 10 may adjust a rough position or a direction of a virtual object V201 as an operation target according to recognition results of the rotation direction and the rotation angle θ1 of the hand u11. Further, at this time, the information processing device 10 may adjust the rough position or the direction of the virtual object V210 according to a change in three-dimensional position on the real space of the hand u11. As a more specific example, the information processing device 10 may recognize (or estimate) a position or a direction pointed by the hand u11 according to a recognition result of a three-dimensional position or a direction on the real space of the hand u11, and adjust a rough position or a direction of the virtual object V201 according to the recognition result. In addition, a detailed position or a posture of the virtual object V201 may be finely adjusted according to a recognition result of a change in position of the finger of the hand u13 with respect to the palm of the hand u11 (that is, an operation by a finger of the hand u13 on the palm of the hand u11.)

Further, as another example, a position or a direction of the virtual object V201 may be adjusted so that the virtual object V201 as an operation target rotates and moves according to recognition results of the rotation direction and the rotation angle θ1 of the hand u11. In addition, a position or a direction of the virtual object V201 may be adjusted so that the virtual object V201 moves in parallel according to a recognition result of a change in position of a finger of the hand u13 with respect to the palm of the hand u11.

As the first modified example, the examples of the gesture inputs using the right and left hands are described above with reference to Figs. 9 to 11.

### <6.2. Second Modified Example: Example of Gesture Input (Part 2)>

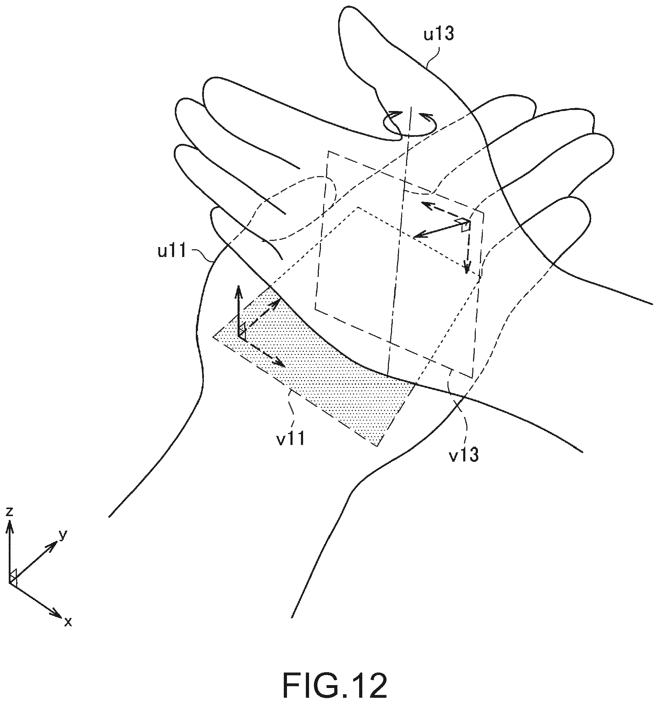

Subsequently, as a second modified example, another example of a gesture input using right and left hands will be described. For example, Fig. 12 is a diagram for describing the overview of a gesture input according to the second modified example.

In the example shown in Fig. 12, the information processing device 10 recognizes the operation of rotating the palm of the hand u13 with the vertical direction of the palm of the hand u11 as an axis in a state in which the palm of the other hand u13 is raised on the palm of the one hand u11, and recognizes a user input according to a recognition result of the operation.

Specifically, the information processing device 10 stipulates the plane v11 extending along the palm of the hand u11 according to a recognition result of the shape of the one hand u11 and a recognition result of the direction on the real space of the hand u11. Similarly, the information processing device 10 stipulates a plane v13 extending along the palm of the hand u13 according to a recognition result of the shape of the one hand u13 and a recognition result of the direction on the real space of the hand u13. Then, the information processing device 10 stipulates a direction of a rotation axis on the real space according to a direction of the plane v11 (in other words, the normal line direction of the plane v11), and recognizes a rotation angle according to the relative positional relationship between the plane v11 and the plane v13.

Under the above control, the information processing device 10 is allowed to associate, for example, a gesture input using the hands u11 and u13 as shown in Fig. 12 with rotation movement on the real space. Therefore, for example, the information processing device 10 may rotate a virtual object as an operation target according to a stipulation result of the direction of the rotation axis and a recognition result of the rotation angle to control a posture of the virtual object.

Further, when recognizing that the hand u11 and the hand u13 are integrally rotated so as to change the direction of the one hand u11 used for stipulating the rotation axis, the information processing device 10 may adjust the direction of the rotation axis according to the direction of the hand u11. Under such control, the user may also perform the same operation again besides changing the direction of the palm of the hand u11 after rotating a virtual object as an operation target on the basis of, for example, the action (that is, the operation) described with reference to Fig. 12 to change the direction of the rotation axis and rotate the virtual object again.

Note that the above example describes the case in which the right and left hands are used for the gesture input. However, when a plurality of portions is used for the gesture input, at least one of the plurality of portions may be a portion other than a hand.

As the second modified example, another example of the gesture input using the right and left hands is described above with reference to Fig. 12.

### <6.3. Third Modified Example: Example of Feedback>

Subsequently, an example of giving the feedback of information to a user by the information processing device 10 in the information processing system 1 according to the present embodiment will be described as a third modified example.

In the information processing system 1 according to the present embodiment, the information processing device 10 may give the feedback of information according to a recognition result of a user input to the user when recognizing the user input according to a recognition result of a gesture input using prescribed portions as described above.

In the cases of the examples shown in Figs. 5 and 6, the information processing device 10 may visually present the plane v11 stipulated on the basis of a recognition result of the direction of the palm of the one hand u11, the normal line direction v13 of the plane v11, or the like to the user as display information. Further, as another example, the information processing device 10 may visually present an operation direction, an operation amount, or the like by a finger of the other hand u13 on the palm of the one hand u11 to the user as display information.

Further, in the case of the example shown in Fig. 9, the information processing device 10 may visually present a direction of the one hand u11, a rotation direction of the hand u11, a rotation angle θ1 of the hand u11, or the like to the user as display information.

Under such control, the user is allowed to recognize a gesture input performed by the user himself/herself according to fed back information even in a state in which the user has a difficulty in directly visually observing his/her own portions (for example, the above plurality of portions) when an immersive type HMD is, for example, used as the input/output device 20.

As the third modified example, the example of giving the feedback of information to the user by the information processing device 10 in the information processing system 1 according to the present embodiment is described above as the third modified example.

### <<7. Example of Hardware Configurations>>

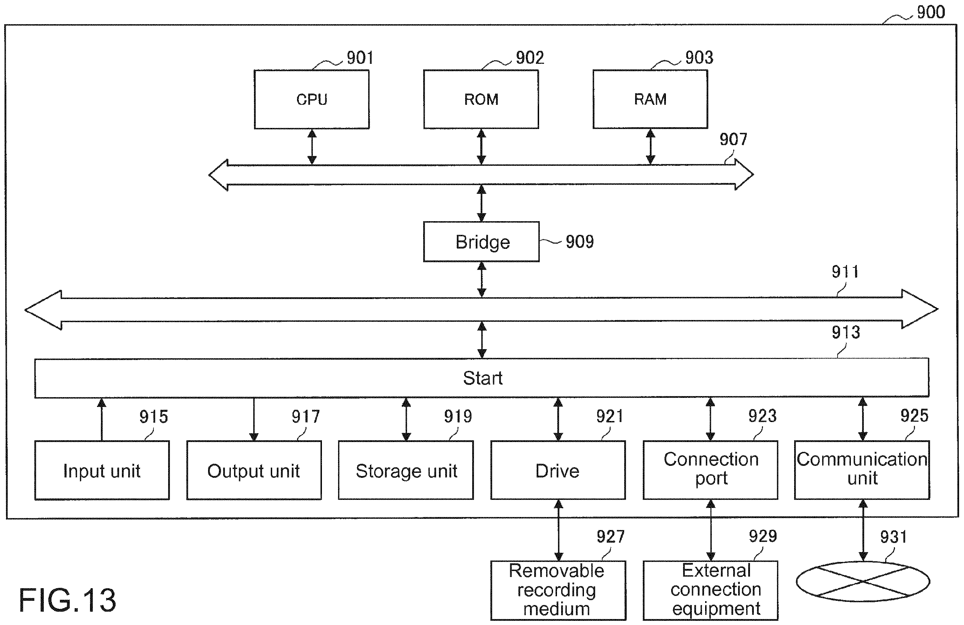

Subsequently, an example of the hardware configurations of an information processing device constituting an information processing system according to an embodiment of the present disclosure will be described in detail with reference to Fig. 13 like the information processing device 10 and the input/output device 20 described above. Fig. 13 is a function block diagram showing a configuration example of the hardware configurations of the information processing device constituting a communication system according to an embodiment of the present disclosure.

An information processing device 900 constituting the communication system according to the present embodiment mainly includes a CPU 901, a ROM 903, and a RAM 905. Further, the information processing device 900 includes a host bus 907, a bridge 909, an external bus 911, an interface 913, an input unit 915, an output unit 917, a storage unit 919, a drive 921, a connection port 923, and a communication unit 925.

The CPU 901 functions as an operation processing unit and a control unit, and controls the whole or a part of an operation inside the information processing device 900 according to various programs recorded on the ROM 903, the RAM 905, the storage unit 919, or a removable recording medium 927. The ROM 903 stores a program, operation parameters, or the like used in the CPU 901. The RAM 905 temporarily stores a program used in the CPU 901, parameters that appropriately change during the running of the program, or the like. The CPU 901, the ROM 902, and the RAM 903 are connected to each other via the host bus 907 constituted by an internal bus such as a CPU bus. For example, the object recognition unit 101, the user input recognition unit 103, the processing execution unit 105, and the display control unit 107 shown in Fig. 7 can be constituted by the CPU 901.

The host bus 907 is connected to the external bus 911 such as a PCI (Peripheral Component Interconnect/Interface) bus via the bridge 909. Further, the external bus 911 is connected via the interface 913 to the input unit 915, the output unit 917, the storage unit 919, the drive 921, the connection port 923, and the communication unit 925.

The input unit 915 is, for example, operation means such as a mouse, a keyboard, a touch panel, a button, a switch, a lever, and a pedal operated by a user. Further, the input unit 915 may be, for example, remote control means (i.e., a remote controller) using infrared light or other electric waves or external connection equipment 929 such as a mobile phone and a PDA corresponding to the operation of the information processing device 900. In addition, the input unit 915 is constituted by, for example, an input control circuit that generates an input signal on the basis of information input from the user using the above operation means and outputs the generated input signal to the CPU 901, or the like. The user of the information processing device 900 is allowed to operate the input unit 915 to input various data to the information processing device 900 or provide instructions for performing a processing operation to the information processing device 900. For example, the input unit 221 shown in Fig. 7 can be constituted by the input unit 915.

The output unit 917 is constituted by a unit capable of visually or acoustically notifying the user of acquired information. As such a unit, a display unit such as a CRT display unit, a liquid crystal display unit, a plasma display unit, an EL display unit, and a lamp, an audio output unit such as a speaker and a head phone, a printer unit, or the like is available. The output unit 917 outputs, for example, results obtained from various processing performed by the information processing device 900. Specifically, the display unit displays results obtained from various processing performed by the information processing device 900 in the form of texts or images. On the other hand, the audio output unit converts an audio signal composed of reproduced audio data, acoustic data, or the like into an analog signal and outputs the converted analog signal. For example, the output unit 211 shown in Fig. 7 can be constituted by the output unit 917.

The storage unit 919 is a data storage unit constituted as an example of the storage unit of the information processing device 900. The storage unit 919 is constituted by, for example, a magnetic storage unit device such as a HDD (Hard Disk Drive), a semiconductor storage device, an optical storage device, a magnetic optical storage device, or the like. The storage unit 919 stores a program performed by the CPU 901, various data, or the like. For example, the storage unit 151 shown in Fig. 7 can be constituted by the storage unit 919.

The drive 921 is a recording medium reader/writer and embedded or externally attached to the information processing device 900. The drive 921 reads information recorded on the attached removable recording medium 927 such as a magnetic disk, an optical disk, a magnetic optical disk, and a semiconductor memory and outputs the read information to the RAM 905. Further, the drive 921 is also capable of writing information in the attached removable recording medium 927 such as a magnetic disk, an optical disk, a magnetic optical disk, and a semiconductor memory. The removable recording medium 927 is, for example, a DVD medium, a HD-DVD medium, a Blu-ray (TM) medium, or the like. Further, the removable recording medium 927 may be a CF (Compact Flash) (TM), a flash memory, a SD memory card (Secure Digital Memory Card), or the like. Further, the removable recording medium 927 may be, for example, an IC card (Integrated Circuit Card) with a non-contact IC chip mounted thereon, electronic equipment, or the like.

The connection port 923 is a port for directly connecting to the information processing device 900. As an example of the connection port 923, a USB (Universal Serial Bus) port, an IEEE1394 port, a SCSI (Small Computer System Interface) port, or the like is available. As another example of the connection port 923, an RS-232C port, an optical audio terminal, a HDMI (TM) (High-Definition Multimedia Interface) port, or the like is available. With the external connection equipment 929 connected to the connection port 923, the information processing device 900 directly acquires various data from the external connection equipment 929 or provides the external connection equipment 929 with various data.

The communication unit 925 is, for example, a communication interface constituted by a communication device or the like for connecting to a communication network (network) 931. The communication unit 925 is, for example, a communication card for wired or wireless LAN (Local Area Network), Bluetooth (TM), or WUSB (Wireless USB), or the like. Further, the communication unit 925 may be an optical communication router, an ADSL (Asymmetric Digital Subscriber Line) router, a various-communication modem, or the like. The communication unit 925 is capable of sending and receiving signals or the like to and from, for example, the Internet or other communication equipment in accordance with, for example, a prescribed protocol such as TCP/IP. Further, a communication network 931 connected to the communication unit 925 is constituted by a wired or wirelessly connected network or the like, and may be, for example, the Internet, domestic LAN, infrared communication, radio wave communication, satellite communication, or the like.

The example of the hardware configurations capable of realizing the functions of the information processing device 900 constituting the communication system according to the embodiment of the present disclosure is described above. The above respective constituents may be constituted by general-purpose members, or may be constituted by hardware specialized in the functions of the respective constituents. Accordingly, hardware configurations for use can be appropriately changed according to occasional technological levels at which the present embodiment is performed. Note that although not shown in Fig. 13, various configurations corresponding to the information processing device 900 constituting the information processing system are provided as a matter of course.

Note that it is possible to create a computer program for realizing the respective functions of the information processing device 900 constituting the information processing system according to the present embodiment as described above and load the created computer program into a personal computer or the like. Further, a computer-readable recording medium storing such a computer program can also be provided. As the recording medium, a magnetic disk, an optical disk, a magnetic optical disk, a flash memory, or the like is, for example, provided. Further, the above computer program may be distributed via, for example, a network without the use of the recording medium. Further, the number of computers that perform the computer program is not particularly limited. For example, a plurality of computers (for example, a plurality of servers or the like) may perform the computer program in cooperation with each other.

### <<8. Conclusion>>

As described above, the information processing device 10 recognizes a first portion and a second portion different from the first portion among the portions of a body in the information processing system 1 according to the present embodiment. Then, the information processing device 10 recognizes a user input according to a three-dimensional positional relationship on a real space between the first portion and the second portion. As a more specific example, the information processing device 10 may recognize a user input according to respective recognition results of a direction on the real space of a first portion (for example, one hand) and the relative positional relationship between the first portion and a second portion (for example, the other hand). Further, as another example, the information processing device 10 may recognize a user input according to a recognition result of a relative direction of a first portion (for example, a rotation angle of one hand) with respect to a second portion.

Under the above configuration, a user is allowed to input three-dimensional information (in other words, a three-dimensional operation) with a simple and intuitive gesture input such as when designating a three-dimensional position or a posture of a virtual object in the information processing system 1 according to the present embodiment.

Further, the information processing device 10 may perform the above recognition of a user input when a second portion contacts or comes close to a first portion in the information processing system 1 according to the present embodiment. In other words, the information processing device 10 may refrain the above recognition of the user input when the first portion and the second portion are separated from each other by a prescribed distance or more. Under such control, it becomes possible to prevent the occurrence of an event in which a user input is falsely recognized on the basis of the operation of a user when the user inputs information to the information processing device 10 at an unintended opportunity. Further, in this case, the user performs a gesture input in a state in which one portion among a plurality of portions is positioned near the other portion (eventually, in a state in which the one portion contacts the other portion). Therefore, a user is allowed to easily intuitively recognize a gesture input performed by the user himself/herself even in a state in which the user has a difficulty in directly visually observing his/her own portions (for example, the above plurality of portions) when an immersive type HMD is, for example, used as the input/output device 20.

Note that a gesture input according to the present embodiment described above may be used in combination with another user interface (that is, another input method). As a specific example, a gesture input according to the present embodiment may be used in combination with a so-called visual line input in which a detection result of a user's visual line is used as a user input. In this case, for example, the information processing device 10 may recognize a three-dimensional position or a direction on a real space designated by a user according to a detection result of a user's visual line, and correct a recognition result of the position or the direction according to a recognition result of a gesture input according to the present embodiment. Under such a configuration, for example, a user is also allowed to roughly designate a three-dimensional position or a direction on a real space with a visual line and finely adjust the designation of the position or the direction according to a gesture input according to the present embodiment. Of course, a type of another user interface combined with a gesture input according to the present embodiment is not limited to the above example only.

The preferred embodiments of the present disclosure are described above with reference to the accompanying drawings, but the technical scope of the present disclosure is not limited to the examples. It is obvious that persons having ordinary knowledge in the technical field of the present disclosure could conceive various modified examples or corrected examples within the range of the technical spirit described in claims, and understood that such modified examples or corrected examples fall within the technical scope of the present disclosure as a matter of course.

Further, the effects described in the present specification are given only for illustration or exemplification and are not limitative. That is, the technology according to the present disclosure could produce, together with or instead of the above effects, other effects obvious to skilled persons from the description of the present specification.

Note that the following configurations also fall within the technical scope of the present disclosure.
(1) An information processing device, including:
   a first recognition unit recognizing a first portion and a second portion different from the first portion of a body; and
   a second recognition unit recognizing a user input according to a three-dimensional positional relationship on a real space between the recognized first portion and the second portion.
(2) The information processing device according to (1), wherein
   the second recognition unit recognizes the user input according to recognition results of a three-dimensional direction on the real space of the first portion and a relative positional relationship between the first portion and the second portion.
(3) The information processing device according to (2), wherein
   the second recognition unit recognizes the user input according to recognition results of a direction on the real space of a plane stipulated according to the direction of the first portion and a relative positional relationship between the plane and the second portion.
(4) The information processing device according to (3), wherein
   the second recognition unit recognizes the user input according to a relative positional relationship between a first plane representing the plane and a second plane stipulated according to a three-dimensional direction on the real space of the second portion.
(5) The information processing device according to (2), wherein
   the second recognition unit recognizes the user input according to a recognition result of a relative direction of the first portion with respect to the second portion.
(6) The information processing device according to (2), wherein
   the second recognition unit recognizes the user input according to recognition results of the three-dimensional direction and a position on the real space of the first portion and the relative positional relationship between the first portion and the second portion.
(7) The information processing device according to any one of (1) to (6), wherein
   the second recognition unit controls a condition on the recognition of the user input according to the three-dimensional positional relationship on the real space between the first portion and the second portion according to a prescribed condition.
(8) The information processing device according to any one of (1) to (7), wherein
   the second recognition unit recognizes the user input according to the positional relationship when the first portion and the second portion contact or come close to each other.
(9) The information processing device according to any one of (1) to (8), wherein
   at least one of the first portion or the second portion is at least a part of right and left hands.
(10) The information processing device according to (9), wherein
   the first portion is one of the right or left hands, and
   the second portion is a finger of the other hand different from the one hand.
(11) The information processing device according to any one of (1) to (10), including:
   a control unit controlling a display of display information on a prescribed output unit according to a recognition result of the user input.
(12) An information processing method, including:
   recognizing a first portion and a second portion different from the first portion of a body by a computer; and
   recognizing a user input according to a three-dimensional positional relationship on a real space between the recognized first portion and the second portion by the computer.
(13) A program causing a computer to perform:
   recognition of a first portion and a second portion different from the first portion of a body; and
   recognition of a user input according to a three-dimensional positional relationship on real space between the recognized first portion and the second portion.

### Reference Signs List

- 1: information processing system
- 10: information processing device
- 101: object recognition unit
- 103: user input recognition unit
- 105: processing execution unit
- 107: display control unit
- 151: storage unit
- 20: input/output device
- 201: imaging unit
- 211: output unit
- 221: input unit
- 231: detection unit

## Claims

1. An information processing device, comprising:
a first recognition unit recognizing a first portion and a second portion different from the first portion of a body; and
a second recognition unit recognizing a user input according to a three-dimensional positional relationship on a real space between the recognized first portion and the second portion.

2. The information processing device according to claim 1, wherein
the second recognition unit recognizes the user input according to recognition results of a three-dimensional direction on the real space of the first portion and a relative positional relationship between the first portion and the second portion.

3. The information processing device according to claim 2, wherein
the second recognition unit recognizes the user input according to recognition results of a direction on the real space of a plane stipulated according to the direction of the first portion and a relative positional relationship between the plane and the second portion.

4. The information processing device according to claim 3, wherein
the second recognition unit recognizes the user input according to a relative positional relationship between a first plane representing the plane and a second plane stipulated according to a three-dimensional direction on the real space of the second portion.

5. The information processing device according to claim 2, wherein
the second recognition unit recognizes the user input according to a recognition result of a relative direction of the first portion with respect to the second portion.

6. The information processing device according to claim 2, wherein
the second recognition unit recognizes the user input according to recognition results of the three-dimensional direction and a position on the real space of the first portion and the relative positional relationship between the first portion and the second portion.

7. The information processing device according to claim 1, wherein
the second recognition unit controls a condition on the recognition of the user input according to the three-dimensional positional relationship on the real space between the first portion and the second portion according to a prescribed condition.

8. The information processing device according to claim 1, wherein
the second recognition unit recognizes the user input according to the positional relationship when the first portion and the second portion contact or come close to each other.

9. The information processing device according to claim 1, wherein
at least one of the first portion or the second portion is at least a part of right and left hands.

10. The information processing device according to claim 9, wherein
the first portion is one of the right or left hands, and
the second portion is a finger of the other hand different from the one hand.

11. The information processing device according to claim 1, comprising:
a control unit controlling a display of display information on a prescribed output unit according to a recognition result of the user input.

12. An information processing method, comprising:
recognizing a first portion and a second portion different from the first portion of a body by a computer; and
recognizing a user input according to a three-dimensional positional relationship on a real space between the recognized first portion and the second portion by the computer.

13. A program causing a computer to perform:
recognition of a first portion and a second portion different from the first portion of a body; and
recognition of a user input according to a three-dimensional positional relationship on a real space between the recognized first portion and the second portion.
